# EUROPEAN PATENT APPLICATION

(11) **EP 0 549 117 A1**
(43) Date of publication of application: **30.06.1993**
(21) Application number: 92310062.2
(22) Date of filing: 03.11.1992
(51) Int. Cl.: C09K 21/14, C08J 5/24, C08K 3/22

(54) **Composite materials having an inorganic oxide filled epoxy flame retardant barrier**

(30) Priority: 25.11.1991 US 797527
(71) Applicant: ICI COMPOSITES INC., Tempe, Arizona 85043 (US)
(72) Inventor: Yap, Hugh A., Phoenix Arizona 85044 (US)
(74) Representative: Graham, John George

(57) **Abstract**

A composite material having an inorganic oxide filled epoxy resin flame retardant layer in combination with a structural organic polymer and the use of such a layer as a flame retardant barrier.

## Description

The present invention is directed to composite materials having an inorganic oxide filled epoxy flame retardant body in combination with a structural organic polymer.

A problem in the structural organic polymer art is that some organic polymers are suspect as hazards due to their flammability properties when exposed to fire and/or heat. This hazard is particularly noted when the organic polymer materials are used in an aircraft environment. The US Government has promulgated standards which are required of materials that may be used in the aircraft industry Many of the polymer materials can not pass the government standard and, unless made more flame retardant, cannot be approved for use in aircraft.

A US Government standard for flammability resistance is set out in FAR 25.853 and is herein incorporated by reference. Three of the standard tests require a twelve and a sixty second vertical burn and a thirty second 45 degree angle burn. In these tests the flame, usually a bunsen burner type flame, impinges on the material. To pass the sixty second vertical burn test the material, after a sixty second flame application, if ignited must self-extinguish within fifteen seconds; the average vertical burn length must not exceed approximately 15.2 centimeters; and the average melt drip extinguishing time must be less than or equal to three seconds. This means that the material must put itself out, that the flame must not spread throughout the material and that the material can not be a source of fire spread to other areas.

It is known in this art to use inorganic materials as a source of fire/heat barrier.

Epoxy resin materials are known for their bonding properties.

Epoxy materials, however, have been eschewed for the hazard presented due to their flammability and/or smoke generating properties Generally, carriers for the inorganic oxides are characterised by and are chosen for their flame retardant properties.

In the present invention, the inorganic oxides are combined with epoxy materials to give surprising flame retardant properties. This combination may be applied as a film, adhesive, and/or coating to any of the substrate structural organic polymers known to those skilled in this art.

The uses of the present invention are most advantageous in the aircraft field of art. However, in any of the transportation and/or structural fields of art and/or vehicles where light weight flame retardant materials are needed, the present invention will provide advantages heretofore unknown by the combination of these materials. This is particularly pertinent in primary structural aerospace applications where flame retardancy is required in the interior and some of the exterior of the airplane. An example of one of these applications are floor beams. In particular, the marine, automobile and rail means of transportation will be advantaged by the invention disclosed herein.

### Summary of the Invention

A composite material comprises an inorganic oxide filled epoxy resin body combined with a single and/or a plurality of structural organic polymers whereby said body enhances the flame retardant properties of said structural polymers.

Said organic polymers may be composites of either continuous and/or discontinuous reinforcing materials.

Any epoxy resin may be found useful for the purposes of the present invention. Most preferable are those derived from bisphenol A, bisphenol E, bisphenol F, bisphenol S, aliphatic and aromatic amines, such as methylene dianiline and aminophenols, and halogen substituted bisphenol resins, novalacs, aliphatic epoxies, and combinations thereof and/or therebetween.

The inorganic oxides combined with the epoxy resin material provide a flame retardant formable and/or mouldable body. Inorganic oxides useful for this purpose are combined with the epoxy resin in weight percent of epoxy resin and oxides from about 1 to 99 weight percent, preferably about 5 to 75 weight percent, and most preferably 10 to 30 weight percent. Useful inorganic oxides are silicates, zirconates, aluminates, titanates, alkalates, alkaline earth oxides, the rare earth metal oxides, transition metal oxides, minerals made therefrom, and combinations thereof and therebetween. Preferred inorganic oxides are silicates, such as magnesium silicate, potassium aluminium silicate, sodium aluminium silicate, magnesium aluminium silicate, and/or combinations thereof and/or therebetween. The most preferred inorganic oxide embodiment are the class of minerals comprised of the micas, especially white Muscovite mica.

The inorganic oxide is combined with the epoxy resin material in a mixer and admixed to produce an inorganic oxide filled epoxy resin body. This body may comprise layers of the inorganic oxide or be heterogeneously admixed to provide a flame retardant benefit. Most preferably, the inorganic oxide is substantially homogeneously dispersed throughout the epoxy resin body.

The body can then be advantageously combined in its cured and/or uncured form with a fabric or tape and/or then combined with other organic polymer structural materials to provide the flame retardant benefit to those materials. The body can be combined with the other materials by any means to create a film and/or coating to provide a barrier between the structural material and the flame and/or heat source. The film and/or coating should form a continuous covering in its most preferred embodiment. Benefits from the body can be realised, however, by a discontinuous covering. The most advantage can be realised by complete encapsulation, but is not preferred for commercial purposes. The body can also be used to retrofit structures. The body is preferred when impregnated into a woven or nonwoven fabric as prepreg, preferably woven fabric.

It is known in this art to make laminate materials from the structural organic polymers. Advantages from the present invention can be realised by filming and/or coating each ply of the laminate with the body of the present invention.

The organic polymers used as structural materials known herein as structural organic polymers that can be advantageously combined with the body include, but are not limited to, polyolefins, amorphous materials, crystalline materials, silicones, siloxanes, polycarbonates, polyarylsulphones, polyarylketones, epoxies, polyesters, polyetheretherketones, polyimides, cyanate esters, polyethersulphones, phenolics, polyamides and/or combinations thereof and/or therebetween. If required, the structural organic polymers can be toughened by adding a toughening agent to the polymers. Toughening agents can be elastomers, core/shell particles, rubber, and thermoplastic polymers such as the ketones, sulphones, esters, imides, amides and copolymers thereof and therebetween. In particular, the toughening agents found useful are polyarylsulphones and polyarylketones such as polyethersulphone (eg Victrex 5003P PES), polyetherethersulphone, polyetheretherketone (eg Victrex PEEK) and polyetherketone and/or copolymers thereof. Fibres, such as carbon fibres, glass, Kevlar, and/or combinations thereof and therebetween, may be added to the structural organic polymers as strength additives. Examples of such functional structural organic polymers are the 977 series of toughened epoxies from ICI Composites Inc and the 3900 series of toughened epoxies from Toray. The structural organic polymers are preferably used as prepreg which can be formed into desired shapes.

The epoxy resin is advantaged for this invention due to its adhesive and/or bonding properties. The body may be adhered to a substrate either before or after curing. This known to those skilled in the art, but enhances the desirability of using the present invention as a flame retardant due to the mateability of the body to other surfaces.

The following examples are provided to further illustrate the present invention. Their presentation is intended to further teach the invention and not intended to limit the scope of the invention.

### Example 1

An epoxy resin consisting of the following composition (expressed in weight percent):-
27.82 % Epotuf 98-411 (which is 75% solids in acetone of the reaction product of 92% bisphenol-A reacted with the diglycidyl ether of bisphenol-A and 8% of a carboxy-terminated butadiene nitrile rubber (CTBN) obtained from Sansum, Torrance, CA),
3.36 % CP-707 (which is a blend of Epon 828 with antimony trioxide (50:50) obtained from Permalite),
20.94 % Epon 828 bisphenol A (which is the reaction product of bisphenol-A and epichlorhydrin obtained from Shell),
7.29 % Kelpoxy G-272 (which is a reaction product of 60% Epon 828 and 40% CTBN obtained from Reichold located in Buffalo,
1.25 % Hycar 1472 (which is a carboxy-terminated butadiene nitrile rubber obtained from B.F. Goodrich) is combined with (expressed in weight percent):-
8.42 % tetrabromo bisphenol A (obtained from Ethyl Corporation)
23 % white Muscovite mica (obtained from KMG Minerals Inc. located at Kings Mountain, NC)
2.0 % fumed silica (obtained from Cabot, Chicago, IL) which represent the filler content. The ingredients are combined with methylethylketone. The combination is cured with Dicyanimide CG 1200 (which is cyanoguanidine obtained from Omicron located at Morristown, NJ) using 2.81 weight percent, Diuron Grade 3 (which is 3-dichlorophenyl-1,1-dimethyl urea obtained from Dupont) using 2.81 weight percent, and 0.30 weight percent Ancamine K61B (which is an amine salt - tris (dimethylaminomethyl) phenol. tri (2-etyhy hexoate) obtained from Pacific Anchor located at Bethlehem, PA). The composition is mixed with an air mixer to a uniform mixture and impregnated onto and in a style 108 fabric or glass scrim forming a prepreg. The solvent should be substantially removed from the prepreg. The resultant prepreg has a resin content of about 50 weight percent and a volatile content of about 1 weight percent maximum is co-cured on Toray 3900 prepreg (a thermoplastically-tougened epoxy resin preprep) for 3 hours at 177 degrees centigrade in an autoclave. The resultant cured sample exhibited the property values shown in the Table, during the sixty second vertical flame test.

### Example 2

Example 2 is the same as Example 1 except a second step is added for secondarily curing and bonding the epoxy body to a laminate derived from Toray 3900 prepreg. This step includes curing the combination at 127 degrees centigrade for 1 hour under 50 psi pressure in an autoclave. The resultant sample exhibited the property values shown in the Table as tested under the sixty second vertical test.

**Table**

| | Example 1 | Toray 3900 laminate | Example 2 |
|---|---|---|---|
| self extinguishing time (in seconds) | 4.5 | 14-16 | 5.2 |
| Ave. burn length (in centimeters) | less than 15.2 | less than 15.2 | less than 15.2 |
| Ave. drip extinguishing time (in seconds) | 0 | 0 | 0 |

## Claims

1. A composite material comprising an inorganic oxide filled epoxy resin body combined with a single and/or plurality of structural organic polymers whereby said body enhances the flame retardant properties of said structural organic polymers.

2. A composite material according to claim 1 wherein said epoxy resin is derived from bisphenol A, bisphenol E, bisphenol F, bisphenol S, aliphatic and aromatic amines, halogen substituted bisphenol resins, novalacs, aliphatic epoxies, and combinations thereof and/or therebetween.

3. A composite material according to claim 1 or claim 2 wherein said inorganic oxide comprises 1 to 99 weight percent of said body, preferably 5 to 75 weight percent of said body and, more especially, 10 to 30 weight percent of said body.

4. A composite material according to any one of the preceding claims wherein said inorganic oxide consists of inorganic oxides selected from the group consisting of silicates, zirconates, aluminates, titanates, alkalates, alkaline earth oxides, rare earth metal oxides, transition metal oxides, minerals made therefrom and combinations thereof and/or therebetween.

5. A composite material according to any one of the preceding claims wherein said inorganic oxide consists of inorganic oxides selected from the group consisting of magnesium silicate, potassium aluminium silicate, sodium aluminium silicate, magnesium aluminium silicate, and/or combinations thereof and/or therebetween.

6. A composite material according to any one of the preceding claims wherein said inorganic oxide consists of mica, especially white Muscovite mica.

7. A composite material according to any one of the preceding claims wherein said body is a film or coating.

8. A composite material according to anyone of the preceding claims wherein said polymers comprise organic polymers selected from the group consisting of silicones, siloxanes, polycarbonates, polyolefins, polyarylsulphones, polyarylketones, epoxies, polyesters, polyimides, cyanate esters, phenolics, polyamides and/or combinations thereof and/or therebetween.

9. A composite material according to any one of the preceding claims wherein said polymers are toughened with a toughening agent and/or reinforced with continuous and/or discontinuous fibres.

10. A composite material according to any one of the preceding claims wherein said body comprises a prepreg, preferably a fabric prepreg.

11. The use of an inorganic oxide filled epoxy resin body as a flame retardant barrier.

12. A composite material comprising:-
a) a shaped structural fibre-reinforced polymeric composition comprising an epoxy-based resin toughened with a thermoplastic polymer; and
b) a layer of fibre-reinforced resin composition in contact with said polymeric composition, the resin component of said resin composition comprising from 70 to 95 weight percent of an epoxy resin derived from bisphenol A, bisphenol E, bisphenol F, bisphenol S, halogen-substituted bisphenols resins, novalacs, aliphatic epoxies and mixtures thereof and from 5 to 30 weight percent of an inorganic oxide selected from the group consisting of mica, white Muscovite mica, silicates, zirconates, aluminates, titanates, alkalates, alkaline earth oxide, rare earth metal oxides, transition metal oxides, magnesium silicate, potassium aluminium silicate, sodium aluminium silicate, magnesium aluminium silicate and mixtures thereof.
